# EUROPEAN PATENT SPECIFICATION

(11) **EP 0 635 138 B1**
(45) Date of publication and mention of the grant of the patent: **17.12.1997**
(21) Application number: 93907891.1
(22) Date of filing: 07.04.1993
(51) Int. Cl.: G02B 5/00, G02B 5/04, G02B 5/18, G01J 3/18

(54) **OPTICAL COMPONENT COMPRISING PRISMS AND A GRATING**
OPTISCHES ELEMENT MIT PRISMEN UND EINEM BEUGUNGSGITTER
COMPOSANT OPTIQUE COMPRENANT DES PRISMES ET UN RESEAU DE DIFFRACTION

(30) Priority: 08.04.1992 FI 921564
(43) Date of publication of application: 25.01.1995
(73) Proprietor: VALTION TEKNILLINEN TUTKIMUSKESKUS, 02150 Espoo 15 (FI)
(72) Inventor: AIKIO, Mauri, SF-90540 Oulu (FI)
(74) Representative: Helino, Timo Kalervo
(86) International application number: FI9300150
(87) International publication number: WO9321548

(56) References cited:
- WO-A-90/07723
- US-A- 3 922 089
- US-A- 4 475 792
- US-A- 4 747 655
- US-A- 5 002 390

## Description

The invention relates to an optical component.

According to prior art there is known optical components, such as a lense, a prism, a grating, with which optical radiation, such as radiation in the visible wavelength range and in the near infrared range can be processed, e.g. directed, collated and/or diffused into spectral parts. From these optical basic components it is known to assemble optical devices for processing radiation.

A drawback of using separate components, e.g. prisms and gratings and arranging them into lensesystems, is that carrying out the wished function requires an exact optomechanical implementation and also assembling and adjusting the apparatus. That is why the assembling of optical apparatuses from separate components in the mentioned way is very slow and expensive.

Other prior art devices are known from WO-A-9 007 723, US-A-4 747 655 and US-A-3 922 089.

The object of the present invention is to achieve a novel optical component, which eliminates the mentioned drawbacks. It is a particular object of the invention to achieve a novel component which can be used in several different apparatuses for processing optical radiation.

The features defining the invention are set out in claim 1.

According to the invention the optical component comprises a combination of two or more prisms and a transmission grating, which is formed as a compact component, in which the radiation is directed with the prisms and the radiation dispersion is acheived by means of the transmission grating to direct the wished radiation wavelengths into one or more wished directions.

According to the component of the invention radiation is processed such that it can be diffused into wavelength components of the radiation directed into wished directions or conversely the radiation components coming from several sources can be collated into one compact radiation beam.

According to one aspect of the invention the optical component comprises two prisms and an intermediate transmission grating. This configuration is the minimum configuration of the optical apparatus to acheive the wished features.

According to one aspect of the invention the transmission grating is a holographic transmission grating of volume type.

According to one aspect of the invention the prisms are identical.

This invention has the following advantages. The mean advantage of the optical component is that by means of this component big optomechanical configurations can be constructed, in which among others things the optical and the mechanical axis of symmetry are coincident. The optical component straightens the optical axis in the spectrograph. This gives advantages, especially in the picturing spectroscophy. Previously there has been utilized only prism configurations of "direct vision" type for implementing a spectrograph, but these have not been commonly utilized in measuring instruments, because the spectrum of these is non-linear too.

Still one advantage of the present invention is that the radiation is directed with two or more prisms and this gives a direct optical structure.

Still one advantage of the present invention is that combining into the prisms an intermediate dispergin element, e.g. transmission grating, gives the radiation passing through the optical component a big dispersion, which can be utilized in different applications.

Still one advantage of the present invention is that the radiation spectrum can be arranged normal to the optical and the mechanical axis. Then the detector does not have to be inclined and thus the angle does not require exact controlling.

Still one advantage is that the present invention as such can be realized as a compact construction. This still facilitates the utilization of small size optical apparatuses.

The invention is described in the following in detail referring to the drawings attached, wherein:
Fig 1 presents schematically one optical component according to the invention as a cross-sectional view;
fig 2 presents an apparatus for registering several spectra;
Fig 3 presents picturing spectroscophy;
Fig 4 presents a monochromator;
Fig 5 presents a wavelength multiplexer and -demultiplexer; and
Fig 6 presents a spectrograph apparatus.

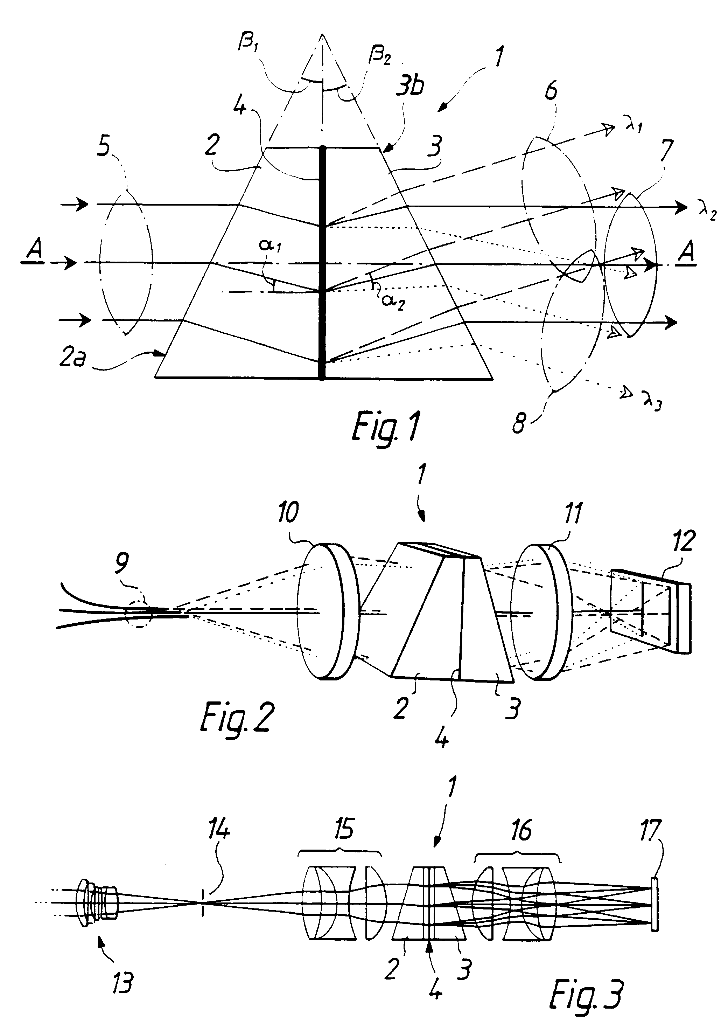

The optical component 1 in figure 1 comprises two prisms 2, 3 and a holographic transmission grating of volume type. The first prism 2 and the second prism 3 are identical and they have been arranged symmetrically on both sides of the grating 4. Thus the top angles beta₁, beta₂ of the prisms 2, 3 are equal, the thicknesses of the prisms are the same and they have been fabricated of the same material. The prisms 2, 3 and the grating 4 have been connected by their faces to a compact entity. The optical axis A-A of the optical component 1 passes symmetrically through the component normal to the grating 4.

The optical component 1 functions principially in the following way. The optical radiation is here passed essentially as a collimated radiation beam 5 to the first face 2a of the first prism 2, where the radiation is refracted according to Snell's law against the transmission grating 4 of volume type. The incidence angle alpha₁ of the grating 4 is such that the wanted wavelength part lambda₂ passes into a wished direction alpha₂ after the grating. In the case of figure 1 the middle wavelength lamda₂ of the spectrum of the incidence radiation passes relatively to the optical axis A-A to the leaving face 3b of the second prism 3 and is directed outwards from the component as a leaving radiation beam 6 marked by a dashed line. Because the prisms 2, 3 are identical, the deflection of the radiation on the leaving face 3b of the second prism 3 relatively to the face 3b is symmetrical to the deflection of the radiation on the incident face 2b of the first prism 2. The leaving radiation beam 7 of this wavelength lambda₂ returns to a radiation beam radiating in the same direction as the original optical axis A-A.

By means of the grating 4 the relation between the propagation angle of the wavelengths lambda₁ and lambda₂ of the incident radiation 5 spectrum and the propagation angle of the middle wavelength lambda₂ is defined. The spectral part with the shortest wavelength lambda₃, which belongs to the incident radiation beam 5, deflects the most in the optical component according to this and forms a leaving radiation beam 8, as can be seen from figure 1, the dashed line.

The optical component of figure 1 can be altered e.g. so that the top angles beta₁, beta₂ of the prisms are different in size and so that differing thicknesses and/or different materials are used in the prisms so as to change their refraction properties.

In figure 2 is presented an apparatus for registering several spectras simultaneously. Radiation is passed to this optical apparatus through photoconductors, e.g. a row of fibers 9, from several sources. The lense system 10 makes the radiation paralell so as to suite the optical component 1 of the invention. This optical component contains the same parts as in figure 1 and the same reference numerals have been used. Following the optical component 1 there is another lense system 11 in the propagation direction of the radiation. With this lense system 11 the radiation from the optical component 1 is directed towards the detector 12, which in this case is a matrix detector, e.g. a CCD matrix detector. The optical radiation can be passed to the apparatus of figure 2 through one or more photoconductors and the radiation spectras are registered with the said matrix detector 12. This apparatus is suitable for registering one or more spectra.

The picturing spectroscopical apparatus, which utilizes the optical component according to this invention, has been presented schematically in figure 3. This apparatus comprises an objective 13 and a slot 14, through which the radiation to be examined is passed to the first lense system 15 for making it paralell for the optical component 1 of the invention. Once again the optical component 1 is principially the same as in figure 1, and the same reference numerals have been used. The radiation leaving the optical component 1 is collated by means of the second lense system 16 and directed towards the detector, especially the matrix detector 17. The incident radiation can also be passed through other means to the first lense system 15 instead of the objective 13 and the slot 14.

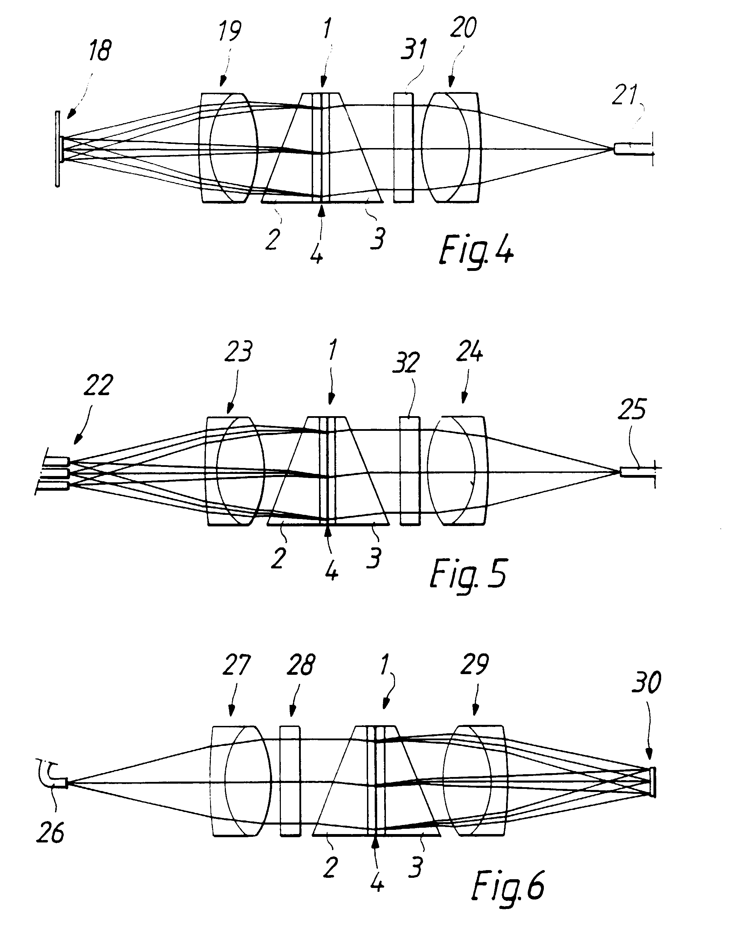

A monochromator, which utilizes the optical component of the invention, has been presented in figure 4. A light source 18 has been formed through adjacent, light source components, e.g. LEDs laying in a row. The radiation leaving the light source 18 is collated by the first lense system 19 and is directed in a relatively small opening angle to the optical component 1 of the invention. Even in this case the optical component is a component according to figure 1, and the same reference numerals have been used. The radiation leaving the optical component 1 is collated with the second lense system 20, the desired part is filtered away by means of the filter 31 and the remaining radiation is focused to the photoconductor 21, e.g. an optical fiber. Instead of the fiber 21 different mirror- and/or volume lense systems can be used for directing the radiation to the wanted site. Essential in the apparatus of figure 4 is that the light source 18 consists of several light source components, the radiation of which is collated by means of an optical component according to the invention to an essentially compact radiation beam.

The wavelength multiplexer is presented in figure 5. An optical radiation information from several sources is passed to this wavelength multiplexer through parallel photoconductors 23, e.g. a fiber row. Through each photoconductor 22 radiation of a different wavelength range can be brought. The radiation from the photoconductor 22 is collated by a first lense system 23 and directed to an optical component 1 according to the invention. The optical component 1 is once again the same as in figure 1, and the same reference numerals have been used. The radiation from the optical component 1 is treated with the filter 32, another lense systemm 24 and is directed to one photoconductor, e.g. a fiber 25. Alternatively it can also be directed to a photoconductor, a light channel etc. Further it is possible to process the radiation with other optical components, e.g. lenses, mirrors etc. to reach the goal.

A wavelength multiplexer of this type can be used in the opposite direction relatively to the mentioned propagation of the radiation. Then it functions as a demultiplexer. The optical radiation is passed through the photoconductor 25 to the apparatus and it is directed in a wished way to the photoconductor 22.

A small module type spectrograph apparatus is presented in figure 6. The radiation to be examined is in this case brought to the apparatus through the photoconductor 26. The photoconductor can e.g. be a multiform fiber, which is connected to the apparatus through a FC-connector. The radiation from the photoconductor 26 is collimated with the first lense system 27, after which it is passed to a high pass filter 28. Then the radiation is brought to travel through an optical component 1 according to this invention. This apparatus is principially the same as that one, which was presented in figure 1, and the same reference numerals have been used. Following the optical component 1, the radiation is collated by another lense system 29, and directed to a detector 30. A spectrograph apparatus of this type works e.g. on the wavelength range 750 - 1065 nm and has a resolution of e.g. 20 nm. The high pass filter 28 prevents all wavelengths under 650 nm to travel into the apparatus. The detector 30 can be a row detector, which is a per se known semiconductor detector. This consists e.g. of 16 elements. On this element a spectra is formed from the incident radiation and registered.

The embodiment examples are meant to illustrate the invention and embodiments of the invention may vary within the scope of the claims following below.

## Claims

1. An optical component (1) comprising a first prism (2) having a transmission grating (4) on one face thereof, characterised by a second prism (3) facing with one of its faces said grating (4), so as to form a compact component having said transmission grating (4) located between said first and second prisms (2,3).

2. Optical component according to claim 1, wherein said transmission grating (4) is a transmission grating of volume type.

3. Optical component according to claim 1 or 2, wherein said first and second prisms (2, 3) are identical.

## Patentansprüche

1. Optisches Element (1) mit einem ersten Prisma (2), das auf einer seiner Flächen ein Transmissionsgitter (4) trägt, gekennzeichnet durch ein zweites Prisma (3), das mit einer seiner Flächen dem Gitter (4) zugewandt ist, so daß ein kompaktes Element gebildet wird, bei dem das Transmissionsgitter (4) zwischen den ersten und zweiten Prismen (2, 3) liegt.

2. Optisches Element nach Anspruch 1, bei dem das Transmissionsgitter (4) ein Volumen-Transmissionsgitter ist.

3. Optisches Element nach Anspruch 1 oder 2, bei dem die ersten und zweiten Prismen (2, 3) identisch sind.

## Revendications

1. Composant optique (1) comprenant un premier prisme (2) muni d'un réseau de transmission (4) sur une première face de celui-ci, caractérisé en ce qu'il comprend un second prisme (3) ayant une de ses faces en vis-à-vis dudit réseau (4), de manière à former un composant compact dont ledit réseau de transmission (4) est situé entre lesdits premier et second prismes (2, 3).

2. Composant optique selon la revendication 1, dans lequel ledit réseau de transmisssion (4) est un réseau de transmission de type tridimensionnelle.

3. Composant optique selon la revendication 1 ou 2, dans lequel lesdits premier et second prismes (2, 3) sont identiques.
